# EUROPÄISCHE PATENTSCHRIFT

(11) **EP 3 417 177 B1**
(45) Veröffentlichungstag und Bekanntmachung des Hinweises auf die Patenterteilung: **08.06.2022**
(21) Anmeldenummer: 17717636.9
(22) Anmeldetag: 27.03.2017
(51) Int. Cl.: F15B 7/00

(54) **HYDRAULISCHER AKTOR, ROBOTERARM, ROBOTERHAND UND VERFAHREN ZUM BETRIEB**
HYDRAULIC ACTUATOR, ROBOT ARM, ROBOT HAND AND OPERATING METHOD
ACTIONNEUR HYDRAULIQUE, BRAS DE ROBOT, MAIN DE ROBOT ET PROCÉDÉ DE FONCTIONNEMENT

(30) Priorität: 31.03.2016 DE 102016205275
(43) Veröffentlichungstag der Anmeldung: 26.12.2018
(73) Patentinhaber: MetisMotion GmbH, 81549 München (DE)
(72) Erfinder: BACHMAIER, Georg, 80469 München (DE); VITTORIAS, Iason, 80538 München (DE); ZÖLS, Wolfgang, 81249 München-Lochhausen (DE)
(74) Vertreter: Hofstetter, Schurack & Partner
(86) Internationale Anmeldenummer: PCT/EP2017/057176
(87) Internationale Veröffentlichungsnummer: WO 2017/167682

(56) Entgegenhaltungen:
- WO-A1-2013/160398
- DE-A1-102013 205 044
- DE-A1-102014 214 977
- GODECKE ANDREAS ET AL: "Ratchet-type micro-hydraulic actuator to mimic muscle behavior", IECON 2013 - 39TH ANNUAL CONFERENCE OF THE IEEE INDUSTRIAL ELECTRONICS SOCIETY, IEEE, 10. November 2013 (2013-11-10), Seiten 3976-3981, XP032539148, ISSN: 1553-572X, DOI: 10.1109/IECON.2013.6699771 [gefunden am 2013-12-30]

## Beschreibung

Die Erfindung betrifft einen hydraulischen Aktor, einen Roboterarm, eine Roboterhand sowie ein Verfahren zum Betrieb. Hydraulische Aktoren sind aus den DE 102013205044 A1, DE 102014214977 A1 und WO2013/160398 A1 bekannt.

Beispielsweise im Rahmen von "Industrie 4.0" wird eine größere Flexibilität der konventionellen maschinellen Automation angestrebt. In letzter Zeit gewinnt das so genannte "Soft Roboting" an Bedeutung. Dabei sollen Roboter in der Fertigung direkt mit Menschen zusammenarbeiten. Voraussetzung hierfür sind Aktoren, welche eine variable Steifigkeit und eine geringe Masse aufweisen. Vorbild für solche Aktoren sind Muskeln des menschlichen Körpers, welche je nach Anwendungsfall vorspannen und somit die Steifigkeit erhöhen können.

Es ist aus der DE 102014214977 bekannt, die Funktionalitäten von menschlichen Muskeln hydraulisch mit hoher Kraftdichte nachzubilden. Dazu wird aus einem Antriebsbalg Fluid zu einem Abtriebsbalg übertragen. Ein Reservoir gleicht dabei die Fluidbilanz aus.

Gleichwohl erfordern bekannte Lösungen zur aktiven Steuerung von Roboterarmen oder Roboterhänden einen großen Bauraum und sind kostenintensiv.

Es ist daher Aufgabe der Erfindung, einen gegenüber dem Stand der Technik verbesserten Aktor bereitzustellen. Es ist ferner Aufgabe der Erfindung, ein Verfahren zum Betrieb eines solchen Aktors bereitzustellen. Weiterhin sollen ein verbesserter Roboterarm und eine verbesserte Roboterhand angegeben werden. Insbesondere sollen der erfindungsgemäße Aktor und das erfindungsgemäße Verfahren eine aktive Betätigung von Roboterarmen und Roboterhänden erlauben und zugleich mit einem verringerten Bauraum und kostengünstig realisierbar sein.

Diese Aufgabe wird mit einem hydraulischen Aktor mit dem in Anspruch 1 angegebenen Merkmalen, mit einem Roboterarm und einer Roboterhand mit den in Anspruch 7 angegebenen Merkmalen

sowie mit einem Verfahren mit den in Anspruch 8 angegebenen Merkmalen gelöst. Bevorzugte Weiterbildungen der Erfindung ergeben sich aus den zugehörigen Unteransprüchen, der nachfolgenden Beschreibung und der Zeichnung.

Der erfindungsgemäße hydraulischen Aktor umfasst einen hydraulischen Antriebszylinder, insbesondere mit einem Antriebskolben, einen ersten hydraulischen Abtriebszylinder, welcher hydraulisch mit dem Antriebszylinder gekoppelt ist, sowie ein Druckbegrenzungsventil, welches abhängig von einer Einwirkzeit einer Kraft auf den Antriebszylinder und/oder den Antriebskolben den ersten Abtriebszylinder druckbegrenzt, wobei das Druckbegrenzungsventil zur Druckbegrenzung gegenüber und/oder zur Druckentlastung in einen zweiten Abtriebszylinder angeordnet ist und wobei der zweite Abtriebszylinder mit dem Antriebszylinder hydraulisch gekoppelt ist.

Mittels des erfindungsgemäßen hydraulischen Aktors lässt sich mittels der Einwirkzeit der Kraft auf den Antriebskolben das Druckbegrenzungsventil steuern. Das Druckbegrenzungsventil, welches den ersten Abtriebszylinder druckbegrenzt, stellt aufgrund dieser Druckbegrenzung die Steifigkeit des hydraulischen Aktors ein. Mittels der Einwirkzeit einer Kraft auf den Antriebskolben kann folglich die Steifigkeit des hydraulischen Aktors eingestellt werden und somit ein menschlicher Muskel nachgebildet werden.

Vorteilhaft bildet der zweite Abtriebszylinder einen weiteren Aktor, der mit dem ersten Abtriebszylinder zusammenwirkend einander entgegengesetzte Richtungen eines Freiheitsgrades abdecken kann. Auf diese Weise ist es nicht erforderlich, für die beiden einander entgegengesetzten Richtungen jeweils einen Aktor wie er aus dem Stand der Technik bekannt ist, vorzusehen. Folglich lässt sich ein solcher Aktor, der zwei einander entgegengesetzte Richtungen abdecken soll, mit geringerem Bauraum und mit niedrigeren Kosten realisieren. Zweckmäßig ist bei dem erfindungsgemäßen hydraulischen Aktor das Druckbegrenzungsventil zur zumindest zeitweisen Druckbegrenzung gegenüber oder Druckentlastung in den zweiten Abtriebszylinder je nach Betriebszustand angeordnet, d.h. das Druckbegrenzungsventil ist zur Druckbegrenzung in zumindest einem Betriebszustand und zur Druckentlastung in zumindest einem weiteren Betriebszustand angeordnet.

Bevorzugt ist bei dem erfindungsgemäßen hydraulischen Aktor der erste Abtriebszylinder über ein erstes vorgespanntes Rückschlagventil mit dem Antriebszylinder gekoppelt und der zweite Abtriebszylinder über ein zweites vorgespanntes Rückschlagventil mit den Antriebszylinder gekoppelt, wobei erstes Rückschlagventil und zweites Rückschlagventil bezüglich des Antriebszylinders entgegengesetzte Sperrrichtungen aufweisen. *"Einander entgegengesetze Sperrrichtungen bezüglich des Antriebszylinders"* meint hier, dass das erste Rückschlagventil eine Sperrrichtung auf den Antriebszylinder zu gerichtet aufweist, während das zweite Rückschlagventil eine Sperrrichtung vom Antriesbszylinder fort aufweist oder umgekehrt.

Bei dem erfindungsgemäßen hydraulischen Aktor sind der erste und der zweite Abtriebszylinder gemeinsam mittels je eines Mehrwegeventils an den übrigen Teil des hydraulischen Aktors hydraulisch gekoppelt. Auf diese Weise lassen sich mittels Schaltung des Mehrwegeventils die Rollen des ersten Aktuators und des Reservoirs der eingangs genannten bekannten Lösung miteinander tauschen: D.h. in einer ersten Stellung des Mehrwegeventils übernimmt der zweite Abtriebszylinder die Rolle eines Reservoirs, in einer zweiten Stellung des Mehrwegeventils übernimmt der erste Abtriebszylinder die Rolle eines Reservoirs.

Vorzugsweise umfasst der erfindungsgemäße hydraulische Aktor einen Antriebsaktor, der mit dem Antriebszylinder oder dem Antriebskolben bewegungsgekoppelt ist. Idealerweise ist der Antriebsaktor ein Piezoaktor oder eine elektrodynamischer oder ein elektromagnetischer Aktor. Zweckmäßigerweise ist der hydraulische Aktor elektrisch steuerbar. Besonders bevorzugt ist der erfindungsgemäße hydraulische Aktor ein Piezoaktor oder ein elektrodynamischer Aktor oder ein elektromagnetischer Aktor. Ein solcher Aktor lässt sich besonders leicht elektrisch steuern.

In einer bevorzugten Weiterbildung des hydraulischen Aktors ist der Antriebszylinder über ein Rückschlagventil und eine erste Drossel hydraulisch an ein Vorspannvolumen gekoppelt, welches in einem Vorspannhydraulikzylinder, insbesondere mit einem Vorspannkolben, befindlich ist, wobei der Vorspannhydraulikzylinder oder der Vorspannkolben das Druckbegrenzungsventil stellt. Auf diese Weise lässt sich einfach mittels der Einwirkzeit einer Kraft auf den Antriebskolben über das Rückschlagventil und die Drossel hydraulisch das Vorspannvolumen einstellen, welches mittels des Vorspannkolbens das Druckbegrenzungsventil stellt.

Zweckmäßigerweise ist bei dem hydraulischen Aktor das Vorspannvolumen über eine zweite Drossel mit dem zweiten Abtriebszylinder hydraulisch verbunden. Auf diese Weise lässt sich bei entsprechender Einwirkzeit das Vorspannvolumen aus dem zweiten Abtriebszylinder speisen oder in den zweiten Abtriebszylinder entleeren.

Erfindungsgemäß ist bei dem hydraulischen Aktor das Druckbegrenzungsventil zur Druckbegrenzung gegenüber dem oder zur Druckentlassung in den zweiten Abtriebszylinder angeordnet. Auf diese Weise kann bei einer geringen Steifigkeit des hydraulischen Aktors der erste Abtriebszylinder Druck in den zweiten Abtriebszylinder entlassen oder aber je nach Stellung des Druckbegrenzungsventils eine hohe Steifigkeit behalten.

Idealerweise ist bei dem hydraulischen Aktor gemäß der Erfindung im ersten Abtriebszylinder ein erster Abtriebskolben geführt und/oder es ist im zweiten Abtriebszylinder ein zweiter Abtriebskolben geführt. Auf diese Weise fungieren der erste Abtriebskolben und der zweite Abtriebskolben als agierende Elemente des erfindungsgemäßen hydraulischen Aktors. Alternativ und ebenfalls bevorzugt sind der erste und/oder zweite Abtriebszylinder jeweils mit einem Faltenbalg gebildet, sodass zumindest ein Teil des ersten und/oder zweiten Abtriebszylinders das oder die agierenden Elemente des erfindungsgemäßen hydraulischen Aktors bilden.

In einer bevorzugten Weiterbildung des erfindungsgemäßen hydraulischen Aktors ist der erste Abtriebszylinder über ein vorgespanntes Rückschlagventil an den Antriebszylinder gekoppelt. Auf diese Weise kann bei einer hinreichenden Druckdifferenz zwischen Antriebszylinder und erstem Abtriebszylinder ein Antrieb des Antriebszylinders oder des Antriebskolbens weitergeleitet werden. Je nach Druckverhältnissen kann jedoch auch der Antrieb zurückgestellt werden, ohne dass dies eine direkte Konsequenz auf den ersten Abtriebszylinder hat, so dass beispielsweise infolge periodischer Bewegung des Antriebszylinders oder des Antriebskolbens ein großer linearer Hub mittels des ersten Abtriebszylinders erreicht wird.

Der erfindungsgemäße Roboterarm oder Roboterhand weist mindestens einen erfindungsgemäßen hydraulischen Aktor wie zuvor beschrieben auf.

Das erfindungsgemäße Verfahren ist ein Verfahren zum Betrieb eines hydraulischen Aktors oder eines Roboterarms oder einer Roboterhand wie zuvor beschrieben. Bei dem Verfahren wird der Antriebsaktor für die Dauer einer agierenden oder einer nicht agierenden Phase des hydraulischen Aktors mit Auslenkungen mit einer Auslenkdauer in einer Auslenkfrequenz ausgelenkt, wobei die Auslenkdauer eine Bewegungssteifigkeit des hydraulischen Aktors und die Auslenkfrequenz die resultierende Auslenkgeschwindigkeit des hydraulischen Aktors festlegt.

Insbesondere ist bei dem erfindungsgemäßen Verfahren der Antriebsaktor elektrisch steuerbar, insbesondere ein Piezoaktor oder ein elektrodynamischer Aktor oder ein elektromagnetischer Aktor.

In einer weiteren Weiterbildung der Erfindung ist der hydraulische Antriebszylinder und/oder ist/sind der erste und/oder zweite hydraulische Abtriebszylinder und/oder ist der Vorspannhydraulikzylinder jeweils mit einem Faltenbalg gebildet.

Nachfolgend wird die Erfindung anhand eines in der Zeichnung dargestellten Ausführungsbeispiels näher erläutert. Es zeigen
- Figur 1: einen bekannten hydraulischen Aktor schematisch in einer hydraulischen Schaltskizze,
- Figur 2: drei Betriebsmodi (a), (b) und (c) des hydraulischen Aktors gemäß Figur 1 schematisch in einer diagrammatischen Darstellung sowie
- Figur 3: einen erfindungsgemäßen hydraulischen Aktor mit einem ersten und einem zweiten Abtriebszylinder schematisch in einer diagrammatischen Darstellung.

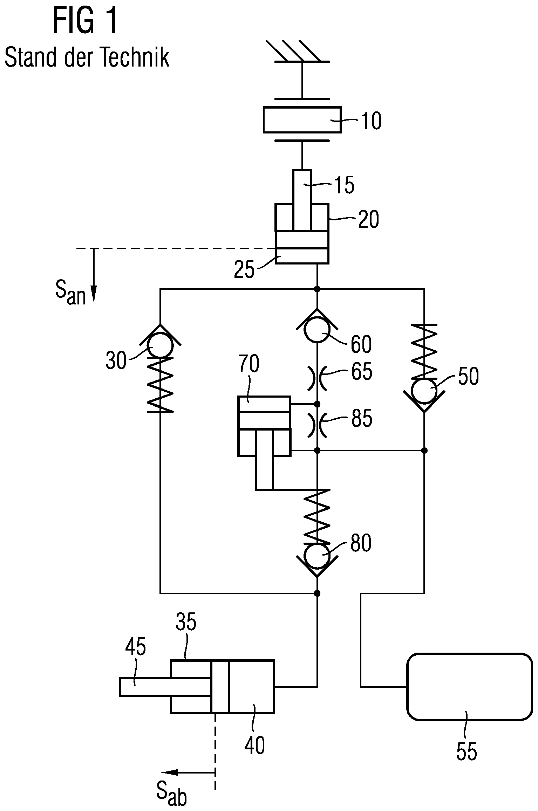

Der in Figur 1 dargestellte bekannte hydraulische Aktor 5 umfasst einen Piezoaktor 10, welcher mit einem Antriebskolben 15 eines hydraulischen Antriebszylinders 20 bewegungsgekoppelt ist.

Der Antriebszylinder 20 umfasst ein hydraulisches Antriebsvolumen 25, welches in an sich bekannter Weise mit Hydrauliköl gefüllt ist. Dieses Antriebsvolumen 25 ist über ein Rückschlagventil 30 bei hinreichend hohem Öffnungsdruck öffnend mit einem hydraulischen Abtriebszylinder 35 hydraulisch gekoppelt. Das Rückschlagventil 30 ist entsprechend vorgespannt. Der Abtriebszylinder 35 weist antriebsseitig ein Abtriebsvolumen 40 auf, welches einen abtriebsseitig befindlichen Abtriebskolben 45 bewegt.

Das Antriebsvolumen ist zudem über ein Rückschlagventil 50 mit einem Reservoir 55 speisbar gekoppelt.

Darüber hinaus kann das Antriebsvolumen 25 über ein Rückschlagventil 60 und eine in Durchlassrichtung hinter dem Rückschlagventil 60 angeordnete Drossel 65 ein Vorspannvolumen 70 eines hydraulischen Vorspannzylinders 90 speisen, welche mittels eines Vorspannkolbens 75 ein Druckbegrenzungsventil 80 steuert. Über eine zweite Drossel 85 ist das Vorspannvolumen 70 an das Reservoir 55 gekoppelt. Das Druckbegrenzungsventil 80 druckbegrenzt oder druckentlastet das Abtriebsvolumen in das oder gegenüber dem Reservoir 55.

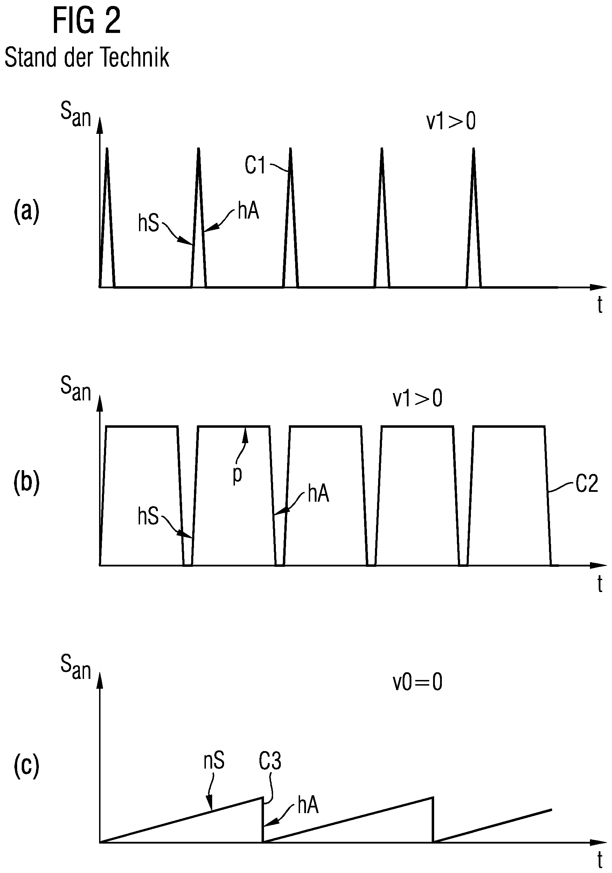

Der in Fig. 1 dargestellte hydraulische Aktor 5 wird wie nachfolgend beschrieben betrieben: Die einzelnen Betriebsmodi sind durch die Ansteuerung des Piezostellers 10 charakterisiert, wie sich aus den nachfolgend näher beschriebenen Stellweg-Zeit-Diagrammen (a), (b) und (c) gem. Fig. 2 ergibt.

In einem ersten Betriebsmodus wird der hydraulische Aktor mit einer geringen Systemsteifigkeit betrieben und mit einer von Null verschiedenen Stellgeschwindigkeit v1 gestellt:
Dazu wird der Piezosteller 10 wie mittels der Kurve C1 gem. Fig. 2 (a) diagrammatisch gezeigt gestellt: Der Piezosteller 10 wird schnell ausgelenkt (d.h., der Stellweg sₐₙ steigt mit hoher Steigung hS mit der Zeit t an). Somit steigt der Druck im Antriebsvolumen 25 des Antriebszylinders 20, sodass sich das das Antriebsvolumen 25 mit dem Abtriebsvolumen 40 koppelnde Rückschlagventil 30 und das das Antriebsvolumen 40 mit dem Vorspannvolumen 70 koppelnde Rückschlagventil 60 öffnen. Da in diesem ersten Betriebsmodus die Auslenkung des Piezostellers 10 und somit der Druckanstieg im Antriebsvolumen 25 nur sehr kurz ist, kann durch das das Antriebsvolumen 25 mit den Vorspannvolumen 70 koppelnde Rückschlagventil 60 aufgrund der seriell verbauten Drossel 65 annähernd kein Hydrauliköl in Richtung Vorspannvolumen 70 fließen, wobei dieser geringe Fluss von Hydrauliköl wieder über die das Vorspannvolumen 70 mit dem Reservoir koppelnden Drossel 85 ins Reservoir 55 abfließt. Somit baut sich im Vorspannvolumen 70 nahezu kein Druck auf. Folglich fließt das Hydrauliköl fast ausschließlich in das Abtriebsvolumen 40, sodass der Abtriebskolben 45 mit einem resultierenden Stellweg s_{ab} des hydraulischen Aktors 5 ausgetrieben wird.

Anschließend wird die Auslenkung des Piezostellers 10 wieder schlagartig (große negative Steigung hA der Kurve C1 in Fig. 2 (a)) verringert, wodurch das das Antriebsvolumen 25 mit dem Abtriebsvolumen 40 koppelnde Rückschlagventil 30 und das das Antriebsvolumen 40 mit dem Vorspannvolumen 70 koppelnde Rückschlagventil 60 schließen. Aufgrund des verringerten Hydrauliköls im Antriebsvolumen 25 entsteht Unterdruck, wodurch sich das das Antriebsvolumen 25 mit dem Reservoir 55 koppelnde Rückschlagventil 50 öffnet und das fehlende Hydrauliköl vom Reservoir 55 in das Antriebsvolumen 25 fließen kann.

Wird im ersten Betriebsmodus dieser Zyklus - d.h. schnelles Auslenken und Rückstellen des Piezostellers 10 - wiederholt, erfolgt eine kontinuierliche Auslenkung des Abtriebskolbens 45. Wirkt auf den Abtriebskolben 45 eine Gegenkraft ein, so erhöht sich gemäß dieser Gegenkraft und des hydraulischen Querschnitts des Abtriebszylinders 35 der Druck im Abtriebsvolumen 40. Da die Schwelle im Druckbegrenzungsventil 80 aufgrund des fehlenden Druckes im Vorspannvolumen 25 sehr gering ist, fließt Hydrauliköl schon bei einer geringen Gegenkraft auf den Abtriebskolben 45 vom Abtriebsvolumen 40 über das Druckbegrenzungsventil 80 in das Reservoir 55 zurück.

In einem zweiten Betriebsmodus wird der hydraulische Aktor 5 mit einer hohen Systemsteifigkeit betrieben und mit einer von Null verschiedenen Stellgeschwindigkeit v1 gestellt:
Dazu wird der Piezosteller 10 wie mittels der Kurve C2 gem. Fig. 2 (b) diagrammatisch gezeigt gestellt: Der Piezosteller 10 wird wie zuvor beschrieben schnell ausgelenkt (d.h., der Stellweg sₐₙ steigt wiederum mit hoher Steigung hS mit der Zeit t an).

Demgemäß steigt der Druck im Antriebsvolumen 25 an und das das Antriebsvolumen 25 mit dem Abtriebsvolumen 40 koppelnde Rückschlagventil 30 und das das Antriebsvolumen 40 mit dem Vorspannvolumen 70 koppelnde Rückschlagventil 60 öffnen. Durch das Abfließen des Hydrauliköls in das Abtriebsvolumen 40 sinkt der Druck im Antriebsvolumen 25 wie im zuvor beschriebenen Betriebsmodus.

Im Gegensatz zum vorherigen Betriebsmodus wird die Auslenkung des Piezostellers 10 hier für eine bestimmte Zeit konstant gehalten (siehe Teil p der Kurve C2 gem. Fig. 2 (b)). Da das das Antriebsvolumen 25 mit dem Abtriebsvolumen 40 koppelnde Rückschlagventil 30 einen definierten Öffnungsdruck hat, schließt es, wenn die Druckdifferenz zwischen Antriebsvolumen 25 und Abtriebsvolumen 40 kleiner als der Öffnungsdruck des Rückschlagventils 30 ist. Da der Piezosteller 10 immer noch ausgelenkt ist, liegt am das Antriebsvolumen 25 mit den Vorspannvolumen koppelnden Rückschlagventil 60 der verbleibende Druck an. Da das das Antriebsvolumen 25 mit den Vorspannvolumen 70 koppelnde Rückschlagventil 60 nicht vorgespannt ist, kann Hydrauliköl über dieses Rückschlagventil 60 und die diesem Rückschlagventil 60 flußabwärts angeordnete Drossel 65 solange fließen bis die Druckdifferenz zwischen Vorspannvolumen 70 und Antriebsvolumen 25 größer ist. Obwohl ein kleiner Teil Hydrauliköl wieder über die das Vorspannvolumen 70 mit dem Reservoir 55 koppelnde Drossel 85 ins Reservoir 55 zurückfließt, steigt der Druck im Vorspannvolumen 70 an. Dadurch wird die Öffnungsschwelle im Druckbegrenzungsventil 80 erhöht.

Nach einer bestimmten Zeit wird der Piezosteller 10 wieder schlagartig auf dessen ursprünglichen Stellweg sₐₙ rückgestellt (große negative Steigung hA der Kurve C2 in Fig. 2 (b)). Dadurch wird wie beim zuvor beschriebenen ersten Betriebsmodus Hydrauliköl vom Reservoir 55 in das Antriebsvolumen 25 gesaugt. Wäre die das Vorspannvolumen 60 mit dem Reservoir 55 koppelnde Drossel 85 nicht verbaut, so würde Hydrauliköl nicht nur aus dem Reservoir 55 sondern auch aus dem Vorspannvolumen 70 gesaugt werden.

Anschließend wird der beschriebene Zyklus - Auslenken und Rückstellen des Piezostellers 10 - wiederholt. Wirkt in diesem Fall auf den Abtriebskolben 45 eine Gegenkraft ein, so erhöht sich wieder der Druck in dem Abtriebsvolumen 40. Allerdings ist die Schwelle im Druckbegrenzungsventil 80 aufgrund des erhöhten Drucks im Vorspannvolumen 70 größer als im vorhergehend beschriebenen Betriebsmodus, wodurch eine höhere Kraft auf den Antriebskolben 15 aufgebaut werden kann und ein Abfließen von Hydrauliköl aus dem Abtriebsvolumen 40 verringert ist. Dadurch erhöht sich die Systemsteifigkeit des erfindungsgemäßen hydraulischen Aktors 5. Die Höhe dieser Steifigkeit wird somit über das Ansteuerungsprofil des Piezostellers 10 eingestellt.

In einem dritten Betriebsmodus wird der hydraulische Aktor 5 mit einer hohen Systemsteifigkeit betrieben und nicht gestellt(d.h. mit einer Stellgeschwindigkeit v0=0 gestellt):
Dazu wird der Piezosteller 10 wie mittels der Kurve C3 gem. Fig. 2 (c) diagrammatisch gezeigt gestellt:
Durch das langsame Auslenken (vergleichsweise geringe Steigung nS) des Piezostellers 10 steigt der Druck im Antriebsvolumen 25 kaum an, wodurch sich nur das das Antriebsvolumen 25 mit dem Vorspannvolumen 70 koppelnde Rückschlagventil 60 öffnet, nicht aber das das Antriebsvolumen 25 mit den Abtriebsvolumen koppelnde Rückschlagventil 30. Dadurch wird kein Hydrauliköl in das Abtriebsvolumen 40, sondern nur in das Vorspannvolumen 70 gepumpt, wodurch die Schwelle des Druckbegrenzungsventils 80 und somit die Systemsteifigkeit des hydraulischen Aktors 5 ansteigt ohne dass sich der Abtriebskolben 45 auslenkt.

Nach einer bestimmten Zeit wird der Piezosteller 10 wieder schlagartig auf dessen ursprünglichen Stellweg sₐₙ rückgestellt (große negative Steigung hA der Kurve C3 in Fig. 2 (c)).

In nicht eigens dargestellten weiteren Ausführungsbeispielen, welche im Übrigen dem in Fig. 1 und 2 dargestellten Ausführungsbeispiel entsprechen, ist anstelle eines Piezostellers 10 oder eine elektrodynamischer oder ein elektromagnetischer Aktor vorhanden.

Es versteht sich, dass in weiteren, nicht eigens dargestellten Ausführungsbeispielen anstelle von hydraulischen Zylindern mit darin geführten Kolben für Antriebs- und/oder Abtriebs- und/oder Vorspannzylinder auch hydraulische Zylinder in der Art von Faltenbälgen ohne darin geführte Kolben vorgesehen sein können.

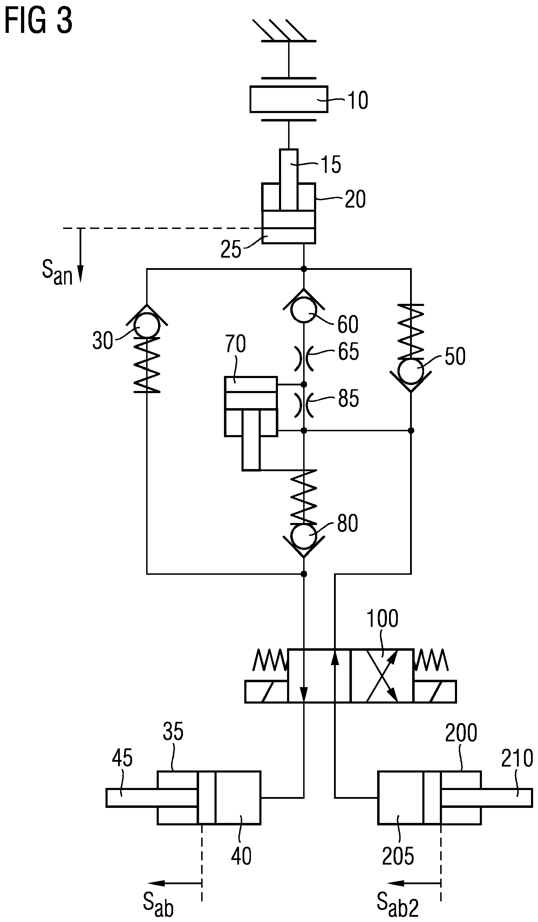

Der in Fig. 3 dargestellte erfindungsgemäße Aktor hingegen weist anstelle des Reservoirs 55 einen zweiten Abtriebszylinder 200 auf. In dem zweiten Abtriebszylinder 200 ist ähnlich dem zuvor beschriebenen ersten Abtriebszylinder 35 ein zweites Abtriebsvolumen 205 vorhanden, welches einen zweiten Abtriebskolben 210 treibt.

Der zweite Abtriebszylinder 200 übernimmt folglich zum einen die Funktion des Reservoirs der zuvor beschriebenen bekannten Lösung. Zusätzlich jedoch übernimmt der zweite Abtriebskolben 210 in dem zweiten Abtriebszylinder 200 die Funktion einer weiteren Aktorkomponente, welche im in Fig. 3 gezeigten Ausführungsbeispiel einen Abtrieb um einen Aktorweg s_{ab2} in einer Abtriebsrichtung ermöglicht, welche der Abtriebsrichtung des ersten Abtriebskolbens 45 des ersten Abtriebszylinders 35 wie oben beschrieben entgegengesetzt ist. Folglich ist der in Fig. 3 dargestellte hydraulische Aktor zur aktorischen Stellung in einander entgegengesetzte Richtungen ausgebildet.

Erfindungsgemäß sind bei dem hydraulischen Aktor gem. Fig. 3 der erste 35 und der zweite Abtriebszylinder 200 gemeinsam mittels eines Mehrwegeventil 100 mit dem übrigen Teil des hydraulischen Aktors hydraulisch gekoppelt. Auf diese Weise lassen sich mittels Schaltung des Mehrwegeventils 100 die Rollen des ersten Abtriebszylinders 35 und des zweiten Abtriebszylinders 200, welcher in einer ersten Stellung die Funktion des Reservoirs 55 der eingangs genannten bekannten Lösung übernimmt, miteinander tauschen: D.h. in einer ersten Stellung des Mehrwegeventils übernimmt der zweite Abtriebszylinder 200 die Rolle eines Reservoirs 55, in einer zweiten Stellung des Mehrwegeventils hingegen übernimmt der erste Abtriebszylinder 35 die Rolle eines Reservoirs 55.

Im Übrigen entspricht der in Fig. 3 dargestellte erfindungsgemäße hydraulische Aktor dem in Fig. 1 dargestellten bekannten hydraulischen Aktor.

Der erfindungsgemäße Roboterarm und die erfindungsgemäße Roboterhand (nicht eigens dargestellt) weisen jeweils einen oder mehrere hydraulische Aktoren wie zuvor beschrieben auf und umfassen jeweils eine Steuereinrichtung, welche den Piezosteller 10 jedes Aktors je nach erforderlicher Auslenkgeschwindigkeit und gewünschter Systemsteifigkeit stellt.

## Patentansprüche

1. Hydraulischer Aktor, umfassend einen hydraulischen Antriebszylinder (20), insbesondere mit einem darin geführten Antriebskolben (15), einen ersten hydraulischen Abtriebszylinder (35), welcher hydraulisch mit dem Antriebszylinder (20) gekoppelt ist, sowie ein Druckbegrenzungsventil (80), welches abhängig von einer Einwirkzeit einer Kraft auf den Antriebszylinder (20) und/oder den Antriebskolben (15) den Druck in dem ersten Abtriebszylinder (35) begrenzt,
wobei das Druckbegrenzungsventil (80) zur Druckbegrenzung gegenüber und/oder zur Druckentlastung in einen zweiten Abtriebszylinder (200) angeordnet ist und wobei der zweite Abtriebszylinder (200) mit dem Antriebszylinder (20) hydraulisch gekoppelt ist, **dadurch gekennzeichnet, dass** der erste Abtriebszylinder (35) und der zweite Abtriebszylinder (200) gemeinsam mittels eines Mehrwegeventils (100) hydraulisch gekoppelt sind.

2. Hydraulischer Aktor nach dem vorhergehenden Anspruch, bei welchem der erste Abtriebszylinder (35) über ein erstes vorgespanntes Rückschlagventil (30) mit dem Antriebszylinder gekoppelt ist und der zweite Abtriebszylinder (200) über ein zweites vorgespanntes Rückschlagventil (50) mit dem Antriebszylinder gekoppelt ist, wobei das erste Rückschlagventil (30) und das zweite Rückschlagventil (50) bezüglich des Antriebszylinders entgegengesetzte Sperrrichtungen aufweisen.

3. Hydraulischer Aktor nach einem der vorhergehenden Ansprüche, welcher einen Antriebsaktor (10) umfasst, der mit dem Antriebszylinder oder dem Antriebskolben (15) bewegungsgekoppelt ist.

4. Hydraulischer Aktor nach Anspruch 3, bei welchem der Antriebsaktor (10) ein Piezoaktor oder eine elektrodynamischer oder ein elektromagnetischer Aktor ist.

5. Hydraulischer Aktor nach einem der vorhergehenden Ansprüche, bei welchem der Antriebszylinder (20) über ein Rückschlagventil (60) und eine erste Drossel (65) hydraulisch an ein Vorspannvolumen (70) gekoppelt ist, welches in einem Vorspannhydraulikzylinder (90), insbesondere mit einem Vorspannkolben (75), befindlich ist, wobei der Vorspannhydraulikzylinder oder der Vorspannkolben das Druckbegrenzungsventil (80) stellt.

6. Hydraulischer Aktor nach Anspruch 5, bei welchem das Vorspannvolumen (70) über eine zweite Drossel (85) mit dem zweiten Abtriebszylinder (200) hydraulisch verbunden ist.

7. Roboterarm oder Roboterhand mit mindestens einem hydraulischen Aktor nach einem der vorhergehenden Ansprüche.

8. Verfahren zum Betrieb eines hydraulischen Aktors (5) nach einem der Ansprüchen 3 oder 4 oder zum Betrieb eines Roboterarms oder einer Roboterhand nach Anspruch 7 wenn abhängig von einem der Ansprüche 3 oder 4, bei welchem der Antriebsaktor (10) des zumindest einen Aktors für die Dauer einer agierenden oder nicht agierenden Phase des hydraulischen Aktors (10) mit Auslenkung mit einer Auslenkdauer (p) in einer Auslenkfrequenz ausgelenkt wird, wobei die Auslenkdauer (p) eine Bewegungssteifigkeit des hydraulischen Aktors (5) und die Auslenkfrequenz die resultierende Auslenkgeschwindigkeit (v1) des hydraulischen Aktors festlegt.

9. Verfahren nach dem vorhergehenden Anspruch, wobei das Mehrwegeventil angesteuert wird, vorzugsweise zum Betrieb des hydraulischen Aktors in einander entgegengesetzte Richtungen.

## Claims

1. A hydraulic actuator comprising a hydraulic drive cylinder (20), in particular having a drive piston (15) guided therein, a first hydraulic output cylinder (35), which is hydraulically coupled to the drive cylinder (20), as well as a pressure limiting valve (80), which limits the pressure in the first output cylinder (35) depending on an action time of a force on the drive cylinder (20) and/or the drive piston (15), wherein the pressure limiting valve (80) is arranged for pressure limitation with respect to and/or for pressure relief in a second output cylinder (200), and wherein the second output cylinder (200) is hydraulically coupled to the drive cylinder (20), **characterized in that** the first output cylinder (35) and the second output cylinder (200) are mutually hydraulically coupled by means of a multi-port valve (100).

2. The hydraulic actuator according to the preceding claim, in which the first output cylinder (35) is coupled to the drive cylinder via a first pretensioned check valve (30) and the second output cylinder (200) is coupled to the drive cylinder via a second pretensioned check valve (50), wherein the first check valve (30) and the second check valve (50) have opposite blocking directions with respect to the drive cylinder.

3. The hydraulic actuator according to any one of the preceding claims, which includes a drive actuator (10), which is coupled to the drive cylinder or the drive piston (15) in terms of motion.

4. The hydraulic actuator according to claim 3, in which the drive actuator (10) is a piezo actuator or an electrodynamic or an electromagnetic actuator.

5. The hydraulic actuator according to any one of the preceding claims, in which the drive cylinder (20) is hydraulically coupled to a pretensioning volume (70), which is located in a pretensioning hydraulic cylinder (90), in particular having a pretensioning piston (75), via a check valve (60) and a first throttle (65), wherein the pretensioning hydraulic cylinder or the pretensioning piston adjusts the pressure limiting valve (80).

6. The hydraulic actuator according to claim 5, in which the pretensioning volume (70) is hydraulically connected to the second output cylinder (200) via a second throttle (85).

7. A robot arm or robot hand having at least one hydraulic actuator according to any one of the preceding claims.

8. A method for operating a hydraulic actuator (5) according to any one of claims 3 or 4 or for operating a robot arm or a robot hand according to claim 7 if depending on any one of claims 3 or 4, in which the drive actuator (10) of the at least one actuator is deflected for the duration of an acting or non-acting phase of the hydraulic actuator (10) having deflection with a deflection duration (p) at a deflection frequency, wherein the deflection duration (p) establishes a motion rigidity of the hydraulic actuator (5) and the deflection frequency establishes the resulting deflection velocity (v1) of the hydraulic actuator.

9. The method according to the preceding claim,
wherein the multi-port valve is controlled, preferably for operation of the hydraulic actuator in directions opposite to each other.

## Revendications

1. Actionneur hydraulique, comprenant un vérin d'entraînement hydraulique (20), en particulier avec un piston d'entraînement (15) guidé à l'intérieur de celui-ci, un premier vérin de sortie hydraulique (35) qui est accouplé hydrauliquement au vérin d'entraînement (20), ainsi qu'une soupape de limitation de pression (80) limitant la pression dans le premier vérin de sortie (35) en fonction d'un temps d'action d'une force sur le vérin d'entraînement (20) et/ou le piston d'entraînement (15),
la soupape de limitation de pression (80) étant disposée à l'opposé d'un deuxième vérin de sortie (200) pour limiter la pression et/ou étant disposée dans un deuxième vérin de sortie (200) pour évacuer la pression, et le deuxième vérin de sortie (200) étant accouplé hydrauliquement au vérin d'entraînement (20),
**caractérisé en ce que** le premier vérin de sortie (35) et le deuxième vérin de sortie (200) sont accouplés hydrauliquement ensemble au moyen d'une soupape à plusieurs voies (100).

2. Actionneur hydraulique selon la revendication précédente, dans lequel le premier vérin de sortie (35) est accouplé au vérin d'entraînement par l'intermédiaire d'un premier clapet de non-retour précontraint (30), et le deuxième vérin de sortie (200) est accouplé au vérin d'entraînement par l'intermédiaire d'un deuxième clapet de non-retour précontraint (50), le premier clapet de non-retour (30) et le deuxième clapet de non-retour (50) présentant des sens bloqués opposés par rapport au vérin d'entraînement.

3. Actionneur hydraulique selon l'une quelconque des revendications précédentes, comprenant un actionneur d'entraînement (10) qui est accouplé en mouvement au vérin d'entraînement ou au piston d'entraînement (15).

4. Actionneur hydraulique selon la revendication 3, dans lequel l'actionneur d'entraînement (10) est un actionneur piézoélectrique ou un actionneur électrodynamique ou électromagnétique.

5. Actionneur hydraulique selon l'une quelconque des revendications précédentes, dans lequel le vérin d'entraînement (20) est accouplé hydrauliquement par l'intermédiaire d'un clapet de non-retour (60) et d'un premier étranglement (65) à un volume de précontrainte (70) qui se trouve dans un vérin hydraulique de précontrainte (90), en particulier à un piston de précontrainte (75), le vérin hydraulique de précontrainte ou le piston de précontrainte réglant la soupape de limitation de pression (80).

6. Actionneur hydraulique selon la revendication 5, dans lequel le volume de précontrainte (70) est relié hydrauliquement au deuxième vérin de sortie (200) par l'intermédiaire d'un deuxième étranglement (85).

7. Bras de robot ou main de robot comprenant au moins un actionneur hydraulique selon l'une quelconque des revendications précédentes.

8. Procédé permettant de faire fonctionner un actionneur hydraulique (5) selon l'une quelconque des revendications 3 ou 4, ou de faire fonctionner un bras de robot ou une main de robot selon la revendication 7 lorsqu'elle dépend d'une des revendications 3 ou 4, dans lequel l'actionneur d'entraînement (10) du au moins un actionneur est dévié pendant la durée d'une phase avec ou sans action de l'actionneur hydraulique (10) ayant une déviation d'une durée de déviation (p) à une fréquence de déviation, la durée de déviation (p) fixant une rigidité en mouvement de l'actionneur hydraulique (5) et la fréquence de déviation fixant la vitesse de déviation résultante (v1) de l'actionneur hydraulique.

9. Procédé selon la revendication précédente, dans lequel la soupape à plusieurs voies est pilotée de préférence pour faire fonctionner l'actionneur hydraulique dans des sens mutuellement opposés.
